# EUROPÄISCHE PATENTSCHRIFT

(11) **EP 1 204 539 B1**
(45) Veröffentlichungstag und Bekanntmachung des Hinweises auf die Patenterteilung: **05.04.2006**
(21) Anmeldenummer: 00936855.6
(22) Anmeldetag: 02.06.2000
(51) Int. Cl.: B60J 7/00, B60J 1/20

(54) **ANTRIEBSVORRICHTUNG FÜR EIN SONNENROLLO EINES KRAFTFAHRZEUGDACHES**
DRIVING DEVICE FOR A ROLL-UP SUNSHIELD OF AN AUTOMOBILE ROOF
DISPOSITIF D'ENTRAINEMENT DU PARE-SOLEIL DU TOIT D'UN VEHICULE AUTOMOBILE

(43) Veröffentlichungstag der Anmeldung: 15.05.2002
(73) Patentinhaber: Webasto Vehicle Systems International GmbH, 82131 Stockdorf (DE)
(72) Erfinder: DE GAILLARD, François, F-85390 Mouilleron en Pareds (FR)
(74) Vertreter: Konnerth, Dieter Hans
(86) Internationale Anmeldenummer: PCT/EP2000/005060
(87) Internationale Veröffentlichungsnummer: WO 2001/094139

(56) Entgegenhaltungen:
- EP-A- 0 644 075
- DE-C- 4 424 188
- FR-A- 2 667 350

## Beschreibung

Die vorliegende Erfindung betrifft eine Antriebsvorrichtung für zumindest ein für eine abzudunkelnde Fläche eines Kraftfahrzeugdaches vorgesehenes Sonnenrollo, wobei die Antriebsvorrichtung ein Zugelement aufweist, an dem ein freies Ende des zumindest einen Sonnenrollos befestigt ist und wobei jedes Sonnenrollo auf einer Wickelrolle aufwickelbar ist. Eine solche Vorrichtung ist allgemein bekannt. FR 2 667 350 beschreibt eine Vorrichtung gemäß dem Oberbegriff.

Bei einer derartigen Antriebsvorrichtung wird üblicherweise jede Wickelrolle auf einem Träger montiert, so daß Lageabweichungen der Wickelrollen auftreten können.

Im allgemeinen befinden sich die geführten Enden des Zugelementes in Führungsschienen. Bei einer bekannten Ausführungsart sind diese Enden jeweils mit einem Antriebskabel verbunden, wobei diese beiden Antriebskabel von einem durch einen Getriebemotor betätigten Ritzel angetrieben werden. Diese Anordnung kann ebenfalls Lageabweichungen enthalten, so daß das Zugelement im allgemeinen nicht genau in einer Querebene zu der Längsachse des betreffenden Fahrzeugs angeordnet und zu der Achse jeder Wickelrolle und dem freien Ende jedes Sonnenrollos nicht parallel ist.

Dieser Parallelitätsfehler führt zu Unterschieden zwischen den auf die Seitenränder der Sonnenrollos ausgeübten Spannungen, so daß die Sonnenrollos in ihrer Auszugstellung dazu neigen, sich zu wellen oder zu werfen.

Dasselbe gilt, wenn das Zugelement manuell mit Hilfe eines Griffes betätigt wird, der sich im wesentlichen in der Mitte des Zugelements befindet.

Aufgabe der vorliegenden Erfindung ist es, die Nachteile der bekannten Antriebsvorrichtungen zu vermeiden und eine Antriebsvorrichtung des vorgenannten Typs vorzuschlagen, die ein gleichmäßiges Ziehen jedes Sonnenrollos und somit eine gleichmäßige Spannung des Stoffes jedes Sonnenrollos über seine gesamte Breite ermöglicht.

Diese Aufgabe wird bei einer gattungsgemäßen Antriebsvorrichtung dadurch gelöst, daß die Antriebsvorrichtung mindestens eine Befestigungsstange aufweist, die schwenkbar in bezug auf das Zugelement montiert ist und an der das freie Ende von dem zumindest einen Sonnenrollo befestigt ist.

Im Falle eines Parallelitätsfehlers zwischen dem Zugelement einerseits und der Wickelrollenachse jedes Sonnenrollos andererseits kann sich die Befestigungsstange gegenüber dem Zugelement verschwenken, um weitgehend oder gänzlich diesen Paraltelitätsfehler auszugleichen und eine möglichst gleichmäßige Spannung des Stoffes jedes Sonnenrollos zu ermöglichen.

Weitere vorteilhafte Ausgestaltungen der Erfindung sind in den Unteransprüchen angegeben.

Vorzugsweise ist für jedes Sonnenrollo eine Befestigungsstange vorgesehen, an der das freie Ende des Sonnenrollos befestigt ist und die an dem Zugelement schwenkbar montiert ist.

Wenn sich die Sonnenrollos in unterschiedlichen Ebenen erstrecken und an eine gewölbte Form der abzudunkelnden Fläche des Kraftfahrzeugdaches angepaßt sind, und auch das Zugelement im wesentlichen entsprechend gewölbt ist, wird der freie Kopfraum im Fahrzeug bei stärker gewölbten Fahrzeugdächern durch die Antriebsvorrichtung weniger eingeschränkt. Die Wölbung ist dabei insbesondere um eine Fahrzeuglängsachse ausgebildet.

Es kann auch zweckmäßig sein, daß sich die Sonnenrollos in unterschiedlichen Ebenen erstrecken und an eine gewölbte Form eines vorderen und eines hinteren Randes einer Dachöffnung angepaßt sind, die einen bewegbaren Deckel aufnimmt, wobei das Zugelement im wesentlichen entsprechend gewölbt ist.

Bevorzugt ist jede Befestigungsstange um eine Schwenkachse schwenkbar gelagert, die im wesentlichen auf der Ebene des entsprechenden Sonnenrollos senkrecht steht.

Die abzudunkelnde Fläche des Kraftfahrzeugdaches ist unabhängig von der Dachkonstruktion und kann ein transparenter Dachabschnitt, ein in das Dach fest eingesetzter transparenter Deckel oder eine Dachöffnung sein, die mittels eines bewegbaren transparenten Deckels, insbesondere einem Schiebedachdeckel, schließbar ist.

Nachfolgend werden Ausführungsbeispiele der Antriebsvorrichtung unter Bezugnahme auf Zeichnungen näher erläutert. Es zeigt:
- Fig. 1: eine schematische Oberansicht eines ersten Ausführungsbeispiels der vorliegenden Erfindung;
- Fig. 2: eine Ansicht ähnlich Figur 1 von einem weiteren Ausführungsbeispiel der vorliegenden Erfindung;
- Fig. 3: eine Ansicht ähnlich Figur 2 von einem weiteren Ausführungsbeispiel der vorliegenden Erfindung;
- Fig. 4: eine schematische perspektivische Ansicht einer Antriebsvorrichtung des Standes der Technik; und
- Fig. 5: eine Draufsicht auf ein eine abzudunkelnde Fläche enthaltendes Dach eines Kraftfahrzeugs.

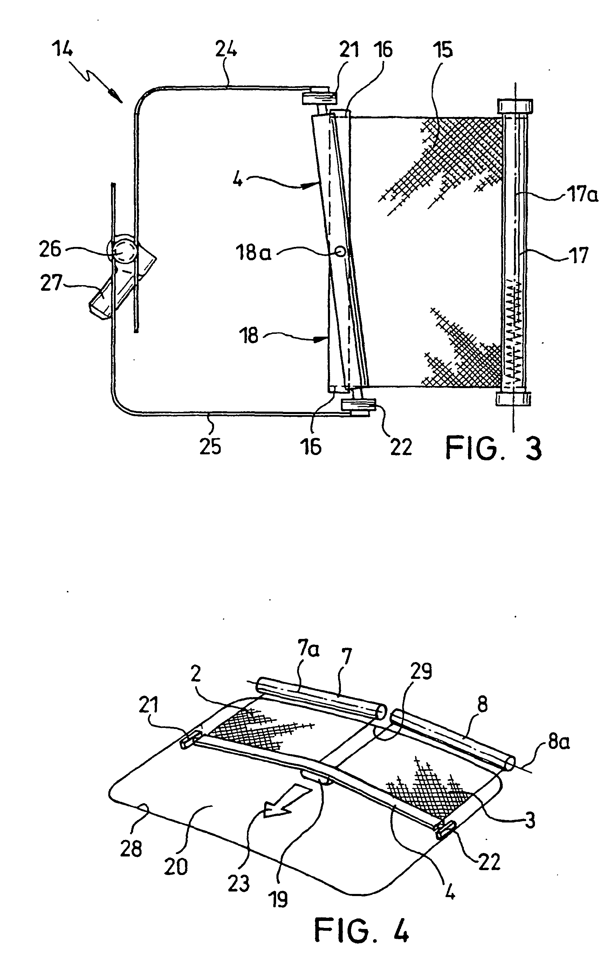

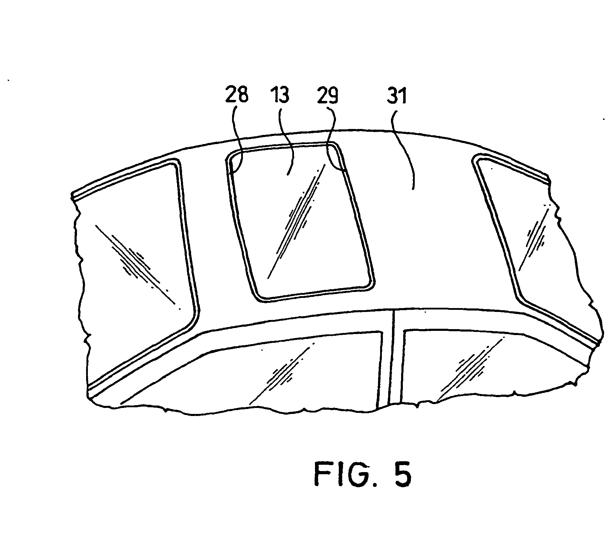

In Figur 4 ist schematisch eine Einheit zweier nebeneinander angeordneter und aneinander angrenzender Sonnenrollos 2, 3 für eine abzudunkelnde Fläche 20 dargestellt, die im wesentlichen der Fläche z. B. unter einem Glasdeckel 13, beispielsweise einem Schiebedach-Glasdeckel, entspricht, der in einer Öffnung eines Kraftfahrzeugdaches 31 (siehe Fig. 5) angeordnet ist. Ein Zugelement 4, beispielsweise eine Zugstange, ist in Querrichtung der abzudunkelnden Fläche 20 vorgesehen und die freien Enden 5, 6 der Sonnenrollos 2, 3 sind mit dem Zugelement 4 verbunden. Jedes Sonnenrollo 2, 3 ist auf einer zugeordneten z. B. federvorgespannten Wickelrolle 7, 8 aufwickelbar.

Das Zugelement 4 weist an jedem Ende einen Zapfen 21, 22 auf, der in einer Gleitschiene (nicht dargestellt) verschiebbar aufgenommen ist, um das Zugelement 4 bei seiner Auszugbewegung in Richtung des Pfeiles 23 am Fahrzeug nach vorne zu führen, wenn die Fläche 20 abgedunkelt werden soll, oder in die umgekehrte Richtung entgegen dem Pfeil 23 am Fahrzeug nach hinten zu führen, wenn die Fläche 20 freigegeben werden soll, wobei jedes Sonnenrollo 2, 3 auf seiner Wickelrolle 7, 8 aufgewickelt wird. In diesem Beispiel wird das Zugelement 4 manuell mit Hilfe eines Handgriffes 19 betätigt, der sich im wesentlichen in der Mitte des Zugelements 4 befindet.

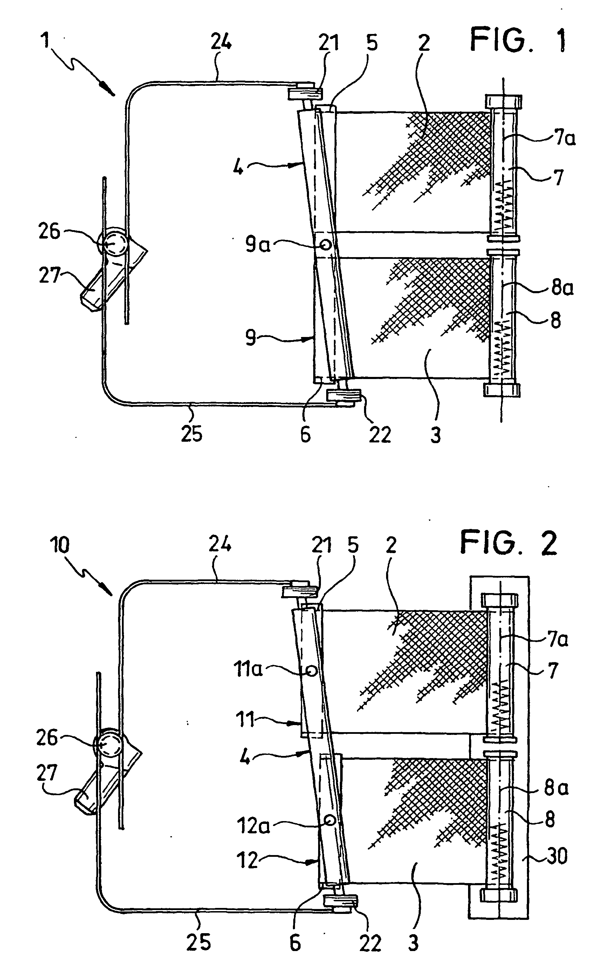

Bei der erfindungsgemäßen Ausführung der Figur 1 enthält eine Antriebsvorrichtung 1 für die beiden Sonnenrollos 2, 3 zwei Kabel 24, 25, die an den Zapfen 21 bzw. 22 befestigt sind und von einem durch einen Getriebemotor 27 betätigten Ritzel 26 angetrieben werden. Die Antriebsvorrichtung 1 weist eine Befestigungsstange 9 auf, die schwenkbar in bezug auf das Zugelement 4 und beispielsweise unter diesem angeordnet ist, wobei die freien Enden 5, 6 der beiden Sonnenrollos 2, 3 mit der Befestigungsstange 9 verbunden sind.

So kann im Falle eines Parallelitätsfehlers zwischen dem Zugelement 4 und den Achsen 7a, 8a der Wickelrollen 7, 8 die Befestigungsstange 9 in bezug auf das Zugelement 4 um eine Schwenkachse 9a schwenken, um zumindest teilweise diesen Parallelitätsfehler auszugleichen. Diese freie Schwenkbewegung der Befestigungsstange 9 in bezug auf das Zugelement 4 kann in Abhängigkeit von dem jeweiligen auszugleichenden Spiel bei den Zugbewegungen der Sonnenrollos 2, 3 und den Rückhol- und Aufwickelbewegungen dieser Sonnen rollos 2, 3 unterschiedlich sein.

Bei der Ausführungsart der Figur 2 umfaßt die Antriebsvorrichtung 10 für jedes Sonnenrollo 2, 3 eine Befestigungsstange 11 bzw. 12, an der das freie Ende 5, 6 des Sonnenrollos 2, 3 befestigt ist und die an dem Zugelement 4 um eine jeweilige Schwenkachse 11a bzw. 12a schwenkbar montiert ist. Durch diese Anordnung kann jede Befestigungsstange 11, 12 derart schwenken, daß sie möglichst parallel zu der Achse 7a, 8a der entsprechenden Wickelrolle 7, 8 ist.

Wie in Figur 4 schematisch dargestellt ist, erstrecken sich die Sonnenrollos 2, 3 im allgemeinen in unterschiedlichen Ebenen, um sich an die insbesondere um eine Fahrzeuglängsachse gewölbte Form eines vorderen und eines hinteren Randes 28 bzw. 29 der zu verdunkelnden Fläche 20 bzw. der Dachöffnung anzupassen. Das Zugelement 4 weist eine im wesentlichen entsprechende gewölbte Form auf, die in der Figur 4 dargestellt ist.

Wenn das in Fig. 2 dargestellte Ausführungsbeispiel der Antriebsvorrichtung einer solchen gewölbten Form angepaßt ist, so schwenkt jede Befestigungsstange 11, 12 um die zugehörige Schwenkachse 11a bzw. 12a, die im wesentlichen auf der Ebene des entsprechenden Sonnenrollos 2, 3 senkrecht steht. Das Schwenken der Befestigungsstangen 11, 12 ermöglicht es, die Parallelitätsfehler in den drei Dimensionen auszugleichen, die sich aus den Herstellungs-, Einbau- und Führungstoleranzen des Zugelements 4 und der Achsen 7a, 8a der Wickelrollen 7, 8 ergeben, die auf einem Träger 30 montiert sind (siehe Fig. 2).

Bei dem in Figur 3 dargestellten Ausführungsbeispiel treibt die Antriebsvorrichtung 14 nur ein einziges Sonnenrollo 15 an, das auf einer um eine Achse 17a rotierenden federbelasteten Wickelrolle 17 aufwickelbar ist. Das freie Ende 16 des Sonnenrollos 15 wird an einer Befestigungsstange 18 befestigt, die am Zugelement 4 um eine Schwenkachse 18a schwenkbar montiert ist. Die Befestigungsstange 18 wird von dem Zugelement 4 getragen und steht auf der Ebene des Sonnenrollos 15 und der Achse 17a der Wickelrolle 17 im wesentlichen senkrecht.

Die vorliegende Erfindung ist nicht auf die beschriebenen Ausführungsbeispiele beschränkt und es können zahlreiche Veränderungen und Modifikationen daran vorgenommen werden, ohne über den Rahmen der Erfindung hinauszugehen.

Beispielsweise können drei Sonnenrollos an Stelle der vorher beschriebenen zwei Sonnenrollos insbesondere in dem Fall, wenn das Zugelement 4 eine gewölbte Form aufweist, verwendet werden.

### Bezugszeichenliste

- 1: Antriebsvorrichtung
- 2: Sonnenrollo
- 3: Sonnenrollo
- 4: Zugelement
- 5: freies Ende
- 6: freies Ende
- 7: Wickelrolle
- 8: Wickelrolle
- 9: Befestigungsstange
- 9a: Schwenkachse
- 10: Antriebsvorrichtung
- 11: Befestigungsstange
- 11a: Schwenkachse
- 12: Befestigungsstange
- 12a: Schwenkachse
- 13: Glasdeckel
- 14: Antriebsvorrichtung
- 15: Sonnenrollo
- 16: freies Ende
- 17: Wickelrolle
- 17a: Achse
- 18: Befestigungsstange
- 18a: Schwenkachse
- 19: Handgriff
- 20: Fläche, Dachöffnung
- 21: Zapfen
- 22: Zapfen
- 23: Pfeil
- 24: Kabel
- 25: Kabel
- 26: Ritzel
- 27: Getriebemotor
- 28: Rand
- 29: Rand
- 30: Träger
- 31: Kraftfahrzeugdach

## Patentansprüche

1. Antriebsvorrichtung (1, 10, 14) für zumindest ein für eine abzudunkelnde Fläche (20) eines Kraftfahrzeugdaches (31) vorgesehenes Sonnenrollo (2, 3, 15), wobei die Antriebsvorrichtung (1, 10, 14) ein Zugelement (4) aufweist, an dem ein freies Ende (5, 6, 16) des zumindest einen Sonnenrollos (2, 3, 15) befestigt ist und wobei jedes Sonnenrollo (2, 3, 15) auf einer Wickelrolle (7, 8, 17) aufwickelbar ist,
**dadurch gekennzeichnet, daß** die Antriebsvorrichtung (1, 10, 14) mindestens eine Befestigungsstange (9, 11, 12, 18) aufweist, die schwenkbar in bezug auf das Zugelement (4) montiert ist und an der das freie Ende (5, 6, 16) von dem zumindest einen Sonnenrollo (2, 3, 15) befestigt ist.

2. Antriebsvorrichtung nach Anspruch 1,
**dadurch gekennzeichnet, daß** für jedes Sonnenrollo (2, 3, 15) eine Befestigungsstange (11, 12, 18) vorgesehen ist, an der das freie Ende (5, 6, 16) des Sonnenrollos (2, 3, 15) befestigt ist und die an dem Zugelement (4) schwenkbar montiert ist.

3. Antriebsvorrichtung nach Anspruch 1 oder 2,
**dadurch gekennzeichnet, daß** sich die Sonnenrollos (2, 3) in unterschiedlichen Ebenen erstrecken und an eine gewölbte Form der abzudunkelnden Fläche des Kraftfahrzeugdaches (31) angepaßt sind, und daß das Zugelement (4) im wesentlichen entsprechend gewölbt ist.

4. Antriebsvorrichtung nach einem der Ansprüche 1 bis 3,
**dadurch gekennzeichnet, daß** sich die Sonnenrollos (2, 3) in unterschiedlichen Ebenen erstrecken und an eine gewölbte Form eines vorderen und eines hinteren Randes (28 bzw. 29) einer Dachöffnung (20) angepaßt sind, die einen bewegbaren Deckel (13) aufnimmt, wobei das Zugelement (4) im wesentlichen entsprechend gewölbt ist.

5. Antriebsvorrichtung nach einem der Ansprüche 1 bis 4,
**dadurch gekennzeichnet, daß** jede Befestigungsstange (11, 12) um eine Schwenkachse (11a, 12a) schwenkbar gelagert ist, die im wesentlichen auf der Ebene des entsprechenden Sonnenrollos (2, 3) senkrecht steht.

6. Antriebsvorrichtung nach einem der Ansprüche 1 bis 5,
**dadurch gekennzeichnet, daß** die abzudunkelnde Fläche des Kraftfahrzeugdaches ein Dachöffnung (20) ist, die von einem bewegbaren transparenten Deckel (13), insbesondere einem Schiebedachdeckel, schließbar ist.

## Claims

1. Driving device (1, 10, 14) for at least one roll-up sunshield (2, 3, 15) provided for an area (20) of a motor vehicle roof (31) to be darkened, the driving device (1, 10, 14) having a pulling element (4), to which a free end (5, 6, 16) of the at least one roll-up sunshield (2, 3, 15) is fixed and it being possible for each roll-up sunshield (2, 3, 15) to be wound up onto a winding roller (7, 8, 17), **characterized in that** the driving device (1, 10, 14) has at least one fixing rod (9, 11, 12, 18), which is mounted such that it can pivot in relation to the pulling element (4) and to which the free end (5, 6, 16) of the at least one roll-up sunshield (2, 3, 15) is fixed.

2. Driving device according to Claim 1, **characterized in that**, for each roll-up sunshield (2, 3, 15), a fixing rod (11, 12, 18) is provided, to which the free end (5, 6, 16) of the roll-up sunshield (2, 3, 15) is fixed and which is mounted on the pulling element (4) such that it can pivot.

3. Driving device according to Claim 1 or 2, **characterized in that** the roll-up sunshields (2, 3) extend in different planes and are matched to an arched shape of the area of the motor vehicle roof (31) to be darkened, and **in that** the pulling element (4) is substantially correspondingly arched.

4. Driving device according to one of Claims 1 to 3, **characterized in that** the roll-up sunshields (2, 3) extend in different planes and are matched to an arched shape of a front and a rear edge (28 and 29, respectively) of a roof opening (20) which accommodates a movable panel (13), the pulling element (4) being substantially correspondingly arched.

5. Driving device according to one of Claims 1 to 4, **characterized in that** each fixing rod (11, 12) is mounted such that it can pivot about a pivot axis (11a, 12a) which is substantially perpendicular to the plane of the corresponding roll-up sunshield (2, 3).

6. Driving device according to one of Claims 1 to 5, **characterized in that** the area of the motor vehicle roof to be darkened is a roof opening (20) which can be closed by a movable transparent panel (13), in particular a sliding-roof panel.

## Revendications

1. Dispositif d'entraînement (1, 10, 14) pour au moins un pare-soleil (2, 3, 15) prévu pour une surface (20) d'un toit de véhicule automobile (31) destinée à être occultée, le dispositif d'entraînement (1, 10, 14) comprenant un élément de traction (4), sur lequel est fixée une extrémité libre (5, 6, 16) du au moins un pare-soleil (2, 3, 15) et chaque pare-soleil (2, 3, 15) pouvant être enroulé sur un mandrin (7, 8, 17),
**caractérisé en ce que** le dispositif d'entraînement (1, 10, 14) comprend au moins une tige de fixation (9, 11, 12, 18), qui est montée de façon pivotante par rapport à l'élément de traction (4) et sur laquelle est fixée l'extrémité libre (5, 6, 16) d'au moins un pare-soleil (2, 3, 15).

2. Dispositif d'entraînement selon la revendication 1,
**caractérisé en ce qu'**une tige de fixation (11, 12, 18) est prévue pour chaque pare-soleil (2, 3, 15), tige sur laquelle est fixée l'extrémité libre (5, 6, 16) du pare-soleil (2, 3, 15) et qui est montée de façon pivotante sur l'élément de traction (4).

3. Dispositif d'entraînement selon la revendication 1 ou 2,
**caractérisé en ce que** les pare-soleil (2, 3) s'étendent dans différents plans et sont adaptés à une forme incurvée de la surface du toit de véhicule automobile (31) destinée à être occultée, et **en ce que** l'élément de traction (4) est incurvé de manière sensiblement correspondante.

4. Dispositif d'entraînement selon l'une quelconque des revendications 1 à 3,
**caractérisé en ce que** les pare-soleil (2, 3) s'étendent dans différents plans et sont adaptés à une forme incurvée d'un bord avant et arrière (respectivement 28 et 29) d'une ouverture de toit (20), qui reçoit un couvercle mobile (13), l'élément de traction (4) étant incurvé de manière sensiblement correspondante.

5. Dispositif d'entraînement selon l'une quelconque des revendications 1 à 4,
**caractérisé en ce que** chaque tige de fixation (11, 12) est montée de manière à pouvoir pivoter autour d'un axe de pivotement (11a, 12a), qui s'étend essentiellement verticalement sur le plan du pare-soleil (2, 3) correspondant.

6. Dispositif d'entraînement selon l'une quelconque des revendications 1 à 5,
**caractérisé en ce que** la surface du toit de véhicule destinée à être occultée est une ouverture de toit (20), qui peut être fermée par un couvercle (13) transparent et mobile, notamment un couvercle de toit coulissant.
